# EUROPEAN PATENT APPLICATION

(11) **EP 4 703 688 A1**
(43) Date of publication of application: **04.03.2026**
(21) Application number: 25193884.1
(22) Date of filing: 04.08.2025
(51) Int. Cl.: G01C 21/34, G01C 21/36, G01C 23/00, G08G 5/21, G08G 5/23, G08G 5/34

(54) **SYSTEM AND METHOD OF GENERATING FREE ROUTE AIRSPACE FLIGHT PLANS**

(30) Priority: 29.08.2024 IN 202411065286; 07.01.2025 US 202519011811
(71) Applicant: Honeywell International Inc., Charlotte, NC 28202 (US)
(72) Inventor: CHIKKEGOWDA, Kantha, Charlotte, 28202 (US); RAMAIAH, Vinoda, Charlotte, 28202 (US); SONGA, Anil Kumar, Charlotte, 28202 (US)
(74) Representative: Ingrassia, Fisher & Lorenz UK Ltd.

(57) **Abstract**

A method includes receiving information of a free route airspace (FRA) downpath along a flight plan of an aircraft, and displaying, on at least one display device on the aircraft, the FRA on an avionics display. The method also includes displaying, on an avionics display of the at least one display device, a graphical user interface (GUI) showing an FRA route factor selection panel comprising multiple selectable flight plan parameter priorities available to be used to generate an FRA flight plan extending at least partially through the FRA. The method also includes receiving a selection of one or more of the FRA flight plan parameter priorities and selected by using the GUI. The method also includes displaying, on an avionics display of the at least one display device, at least one automatically generated FRA flight plan generated by using at least one of the selected flight plan parameter priorities.

## Description

### CROSS REFERENCE TO RELATED APPLICATION

This application claims priority to India Provisional Patent Application No. 202411065286, filed August 29, 2024, the entire content of which is incorporated by reference herein.

### TECHNICAL FIELD

Herein, the disclosed implementations generally relate to vehicle navigation, and more particularly to aircraft navigation systems generating free route airspace flight plans.

### BACKGROUND

Free route airspace (FRA) is a dedicated airspace that indicates users of that airspace can freely plan a route within the FRA and between an established entry point into that airspace and an established exit point from that airspace, instead of following fixed routes within the airspace. The freely planned route between the established entry point and established exit point may route via predetermined intermediate waypoints, according to the flight plan of the user. Although the route between the established entry point and the established exit point may be freely planned by the user, a flight plan or route through the FRA established by an aircrew at the aircraft still remains subject to approval by an air traffic control (ATC).

It has been found that the typical FRA flight plan, whether determined manually or by a flight management system (FMS), or provided or restricted by the ATC, is often the shortest route. However, when the aircrew desires to emphasize other flight plan parameters such as higher fuel efficiency, reduced toxic emissions, and so forth, such flight planning can become very complicated where multiple different flight performance measurements must be used, thereby forcing the aircrew to perform a relatively large number of steps on many cockpit displays or pages, whether the flight planning is performed manually by the aircrew or the aircrew is using the FMS. This decreases aircrew efficiency by creating a larger workload distracting the aircrew, providing more steps susceptible to human error, and consuming more time that could be used on other tasks. Hence, a need exists for safer, more efficient FRA flight planning technology, and in turn aircraft technology, with a reduced aircrew workload while efficiently implementing priorities desired by the aircrew such as fuel-efficiency, reduced emissions, and others.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one implementation, a method includes receiving information of a free route airspace (FRA) downpath along a flight plan of an aircraft, and displaying, on at least one display device on the aircraft, the FRA on an avionics display. The method also includes displaying, on an avionics display of the at least one display device, a graphical user interface (GUI) showing an FRA route factor selection panel comprising multiple selectable flight plan parameter priorities available to be used to generate an FRA flight plan extending at least partially through the FRA. The method also includes receiving a selection of one or more of the FRA flight plan parameter priorities, and the selection is made by using the GUI. The method also includes displaying, on an avionics display of the at least one display device, at least one automatically generated FRA flight plan generated by using at least one of the selected flight plan parameter priorities.

By another implementation, a system includes memory storing one or more databases of predetermined FRA flight plan data, at least one display device in an aircraft cockpit, and processor circuitry forming at least one processor communicatively coupled to the memory and the at least one display. The at least one processor is arranged to operate by receiving information of a free route airspace (FRA) downpath along a flight plan of an aircraft, and displaying, on the at least one display device on the aircraft, the FRA on an avionics display. The processor is arranged to operate by displaying, on an avionics display of the at least one display device, a graphical user interface (GUI) showing an FRA route factor selection panel comprising multiple selectable flight plan parameter priorities available to be used to generate an FRA flight plan through the FRA, receiving a selection of one or more of the FRA flight plan parameter priorities, and the selection is made by using the GUI, and displaying, on an avionics display of the at least one display device, automatically generated multiple FRA flight plans each generated by using at least one of the selected flight plan parameter priorities.

By yet a different implementation, at least one non-transitory computer-readable medium includes instructions that when executed by a computing device, cause the computing device to operate by: receiving information of a free route airspace (FRA) downpath along a flight plan of an aircraft, displaying, on at least one display device on the aircraft, the FRA on an avionics display, and displaying, on the avionics display, a graphical user interface (GUI) showing an FRA route factor selection panel including multiple selectable flight plan parameter priorities to be used to generate an FRA flight plan through the FRA. The instructions also cause the computing device to operate by receiving a selection of one or more of the FRA flight plan parameter priorities, and the selection is made by using the GUI, and displaying, on the FRA, at least one automatically generated FRA flight plan generated by using at least one of the selected flight plan parameter priorities.

Furthermore, other desirable features and characteristics of the system and method for generating optical frequency combs as described herein will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a schematic diagram of an example system for an aircraft according to at least one of the implementations herein;
FIGS. 2A-2B is a flow chart of an example method of generating free route airspace (FRA) flight plans according to at least one of the implementations herein;
FIG. 3 is a schematic diagram of an example avionics display of a FRA and showing a FRA flight planning activator according to at least one of the implementations herein;
FIG. 4 is a schematic diagram of an example avionics display of a FRA and showing a FRA route factor options selection panel according to at least one of the implementations herein;
FIG. 5 is a schematic diagram of an example avionics display of a FRA with an FRA entry and exit waypoint selection panel according to at least one of the implementations herein;
FIG. 6 is a schematic diagram of an example avionics display of a FRA and showing multiple FRA routes, parameter information for the routes, and FRA related option buttons according to at least one of the implementations herein;
FIG. 7 is a schematic diagram of an example avionics display of a FRA, a selected FRA route, and related option buttons according to at least one of the implementations herein;
FIG. 8 is a schematic diagram of an example avionics display of a FRA and an activated FRA route according to at least one of the implementations herein;
FIG. 9 is a schematic diagram of an example avionics display of both multiple alternative horizontal and vertical FRA flight plans according to at least one of the implementations herein; and
FIG. 10 is a schematic diagram of an example avionics display of both multiple horizontal and vertical profiles of a selected activated FRA flight plan according to at least one of the implementations herein.

### DETAILED DESCRIPTION

All of the implementations described herein are example implementations provided to enable persons skilled in the art to make or use the disclosed methods, systems, and devices and not to limit the scope of the claims. Furthermore, no intention exists to be bound by any expressed or implied theory presented in the preceding technical field, background, brief summary, or the following detailed description.

To resolve the issues mentioned above, the present methods, systems, and devices disclosed herein are related to an on-board FRA display system providing a strategic, automated way of generating FRA flight plans on an aircraft while permitting the pilot or aircrew to select controlling parameters and FRA entry and exit waypoints for generating the FRA flight plan. This includes permitting the aircrew to select parameter priorities such as fuel-efficiency, emission reduction, and others. An avionics display shows the FRA as well as multiple alternative FRA flight plans, each already generated by factoring the selected parameters as well as factoring regulations and, by one example approach, obtaining ATC approval for the individual alternatives. The pilot is then permitted to select and confirm one of the displayed FRA flight plans for execution by the aircraft.

This arrangement simplifies FRA flight plan generation by using an easy to use display format, and in turn, improves the efficiency of the FMS, and reduces time consumption and divided attention for planning the FRA route by the aircraft crew. Thus, safety is increased by reducing the pilot workload due to the reduction in FRA flight plan operations or so that their attention can be directed to other cockpit tasks.

It should be noted that while the term 'aircrew' or 'pilot' (or user) is being used while describing the disclosed methods, systems, and devices, this is not meant to be limiting in any way. For example, such use of the term pilot includes any member of an aircrew or may refer to the aircrew collectively, and whether or not the aircraft is on the ground or in the air, or whether on-board an actual aircraft or a flight simulator, unless the context indicates otherwise. Also, the terms trajectory and profile are used interchangeably, as are the terms route and flight plan, and while generally a flight plan refers to data and values of a physical flight path herein, the terms path and plan may be used interchangeably when either term could apply.

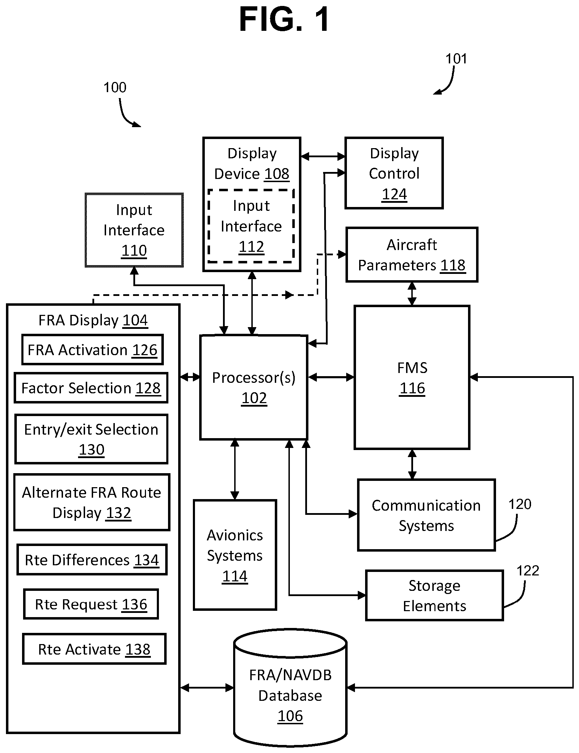

Referring now to FIG. 1, an aircraft system (or just system) 100 may be located onboard a vehicle, such as an aircraft 101. In detail, the system 100 is arranged to operate an aircraft according to one or more of the implementations described herein including FRA flight plan generation and related tasks, functions and/or operations described herein. The system 100 includes, without limitation, one or more processors 102, an FRA display unit 104, an FRA navigation database (FRA/NAVDB) 106, a display device 108, a display control unit 124 (or just display unit), an input interface 110 and/or an input interface 112 on the display device 108, avionics systems 114, a navigation avionics system such as a flight management system (FMS) 116, an aircraft parameters unit 118, communications systems 120, and one or more data storage elements 122 cooperatively arranged to support operation of the system 100, as described in detail below.

In example implementations, the display device 108 is an electronic display capable of graphically displaying flight information or other data associated with operation of the aircraft 101. The display device 108 is communicatively coupled to, and controlled by, the display control unit 124 and/or processors 102. In this regard, the processors 102 and the display control unit 124 are cooperatively configured to display, render, or otherwise convey one or more graphical representations or images associated with operation of the aircraft 101 and FRAs on the display device 108, as described in greater detail below. Generally, avionics display devices 108 visually convey a considerable amount of situational information for pilots. The displayed information is sourced from various databases, sensors, transponders, broadcasts, and FMS computations. The information is often organized in "information layers" (e.g., flight path information, Navigational Aids (NAVAID), airspace information, terrain information, weather information, traffic information, etc.). The various information layers are combined to provide a unified graphical display on the avionics display system.

In various implementations, the display device 108 may be a multifunction control display unit (MCDU), cockpit display device (CDU), primary flight display (PFD), primary engine display (PED), multi-function display (MFD), navigation display (ND) which may include a horizontal situational display (HSD), a vertical display that displays vertical trajectories or data of vertical trajectories, or any other suitable multifunction monitor or display suitable for displaying various symbols and information described herein. The display device 108 may be configured to support multi-colored or monochrome imagery, and the display device 108 may have a liquid crystal display (LCD), a light emitting diode (LED) display, an organic light emitting diode (OLED) display, a heads-up display (HUD), a heads-down display (HDD), a plasma display, a projection display, a cathode ray tube (CRT) display, or the like. The example displays used for the example FRA flight planning herein are described on a horizontal situation display (HSD) and a vertical profile display.

The user input interface 110 is a user interface coupled to the processors 102, and the user input interface 110 and the processors 102 are cooperatively configured to allow a user (e.g., a pilot, or crew member) to interact with the display device 108 and/or other elements of the aircraft system 100. Depending on the implementation, the user input interface 110 may be a keypad, touchpad, keyboard, mouse, touch panel (or touchscreen), joystick, yoke, steering wheel, knob, line select key, or another suitable device adapted to receive input from a user. These devices are on or part of display device 108, or are wired or wirelessly connected to the display device 108. This includes any controller or input device for controlling the motion of the aircraft in addition to any input device being used for FRA flight path planning described herein. In some implementations, the user input interface 110 is an audio input device, such as a microphone, audio transducer, audio sensor, or the like, accompanied with audio speech recognition and other software to input commands to the FMS 116 or FRA display unit 104, or other system or unit on the aircraft for example. In some implementations, the user input interface 110 is a tactile user input device capable of receiving free-form user input via a finger such as with touchpads or touch screens, stylus, pen, or the like. Specifically for the FRA route or flight planning described herein, the display device 100 may display graphical user interfaces while an input interface 112 may include a touch screen directly on, or forming, a screen of the display device 108. By other approaches, the GUIs on the screen of the display device 108 may be a mouse cursor guided by a mouse or other type of controller forming the input interface 110.

The processors 102 are formed by hardware, processor circuitry, processing logic, and/or other components arranged to facilitate communications and/or interaction between the elements of the system 100 and perform additional processes, tasks and/or functions to support operation of the system 100, as described in greater detail below. Depending on the implementation, the processors 102 are formed by processor circuitry, and may be or have a general purpose processor, a controller, a microprocessor, a microcontroller, a content addressable memory, a digital signal processor, an application specific integrated circuit, a field programmable gate array, any suitable programmable logic device, discrete gate or transistor logic, one or more processing cores, a system on a chip (SoC), discrete hardware components, or any combination thereof, designed to perform the functions described herein. In practice, the processors 102 includes processing logic that may be configured to conduct the functions, techniques, and processing tasks associated with the operation of the system 100 described in greater detail below. Furthermore, the methods or algorithms described in connection with the implementations disclosed herein may be operated by using hardware, firmware, and/or software, or in any combination thereof executed by the processors 102. In accordance with one or more implementations, the processors 102 include or otherwise access a data storage element 122, such as a memory (e.g., RAM memory, ROM memory, flash memory, registers, a hard disk, or the like) or another suitable non-transitory short or long term storage media capable of storing computer-executable programming instructions or other data for execution that, when read and executed by the processors 102, cause the processors 102 to execute and perform one or more of the processes, tasks, operations, and/or functions described herein.

The display control unit 124 has the hardware, firmware, processing logic and/or other components configured to control the display and/or rendering of one or more displays pertaining to operation of the aircraft 101 and/or units or systems 104, 114, 116, and 120, and displays on the display device 108 (e.g., synthetic vision displays, navigational maps, vertical profile (trajectory) displays, or vertical situation displays, and the like). Also, the display control unit 124 may access or include one or more databases suitably configured to support operations of the display control unit 124, such as, the FRA navigational database 106 as well as other example databases not shown such as a terrain database, an obstacle database, an air restriction database, a non-FRA navigational database, a geopolitical database, a terminal airspace database, a special use airspace database, or other information for rendering and/or displaying navigational maps and/or other content on the display device 108. In this regard, in addition to including a graphical representation of terrain, a navigational map displayed on the display device 108 may include graphical representations of navigational reference points (*e.g.,* waypoints, navigational aids, distance measuring equipment (DMEs), very high frequency omnidirectional radio ranges (VORs), and the like), designated special use airspaces, obstacles, and the like overlying the terrain on the map. In one or more example implementations, the display control unit 124 accesses a synthetic vision terrain database that includes positional (e.g., latitude and longitude), altitudinal, and other attribute information (e.g., terrain type information, such as water, land area, or the like) for the terrain, obstacles, and other features including altitudes and altitude constraints to support rendering two-dimensional or three-dimensional perspective views of the terrain proximate the aircraft 101 for example.

For the displays specifically used by the FRA flight planning described herein, the display device 108 may show avionics displays such as a horizontal situation (or situational) display (HSD) and/or a vertical profile display to display an FRA, FRA routes, and other information related to the FRA route or flight plan generation.

Still referring to FIG. 1, in one or more example implementations, the processors 102 are coupled to the avionics systems, and this may or may not include the FMS 116, the communications systems 120, as well as other avionics systems 114 such as a navigation unit or system, and one or more additional avionics units to support navigation, flight planning, and other aircraft control functions, as well as to provide real-time data and/or information regarding the operational status of the aircraft 101 to the processors 102. It should be noted that the aircraft system 100 and/or aircraft 101 will likely include numerous avionics systems for obtaining and/or providing real-time flight-related information that may be displayed on the display device 108 or otherwise provided to a user (*e.g.,* a pilot). For example, practical implementations of the aircraft system 100 and/or aircraft 101 will likely include one or more of the following avionics systems or units suitably configured to support operation of the aircraft 101: a weather system, an air traffic management system, a radar system, a traffic avoidance system, an autopilot system, an autothrust system, a flight control system, hydraulics systems, pneumatics systems, environmental systems, electrical systems, engine systems, trim systems, lighting systems, crew alerting systems, electronic checklist systems, an electronic flight bag (EFB) and/or any other suitable avionics system.

The FMS 116, which may be configured to provide real-time navigational data and/or information regarding operation of the aircraft 101. The FMS 116 and similar systems receive input from various sources including an ATC, the pilots, sensors, the navigation databases mentioned, and so forth, and uses the inputs to compute flight plans including horizontal and vertical trajectories. The output showing a flight plan is then displayed or otherwise provided to the aircrew, and this may include flight information including waypoints, altitudes, airspace limitations, airspeed settings, and so forth. When the autopilot or auto thrust is to be used, the flight plan may be confirmed by the pilot before execution.

The aircraft parameters unit 118 may receive parameter priority selections from the FRA display unit 104 as well as the selection of the FRA entry and exit waypoints to be used. The aircraft parameters unit 118 may receive any other FRA setting as well. The FMS 116 then obtains the FRA related data from the aircraft parameters unit 118 to generate an FRA flight plan.

The navigation unit or system mentioned may have or control a navigation database (not shown). The navigation database holds data related to the lateral trajectory planning and according to the file format industry standards. The navigation database may have altitude constraints and other airspace limitations. The navigation system may be realized as a global positioning system (GPS), inertial reference system (IRS), or a radio-based navigation system (e.g., VHF omni-directional radio range (VOR) or long-range aid to navigation (LORAN)), and may include one or more navigational radios or other sensors suitably configured to support operation of the navigation unit, as will be appreciated in the art. The navigation unit can obtain and/or determine the instantaneous position (location) of the aircraft 101 including the current (or instantaneous) horizontal location of the aircraft 101 (e.g., the current latitude and longitude) and the current (or instantaneous) altitude (or vertical or above ground level) for the aircraft 101. The navigation unit can obtain or otherwise determine a heading of the aircraft 101 (*i.e.,* the direction the aircraft 101 is traveling relative to some reference). Additionally, in one or more example implementations, the navigation unit receives data from inertial reference sensors arranged to generate the attitude or orientation (*e.g.,* the pitch, roll, and/or yaw) of the aircraft 101 relative to ground or the Earth.

In one example implementation, the processors 102 are also coupled to the communications unit or system 120 as well as the FMS 116, and which is configured to support communications to and/or from the aircraft 101 via a communications network that requests and receives ATC approval for FRA flight plans. For example, the communications unit 120 may also include a data link system or another suitable radio communication system that supports communications between the aircraft 101 and one or more external monitoring systems, air traffic control, and/or another command center or ground location. Thus, the communications unit 120 may allow the aircraft 101 to receive information that would otherwise be unavailable to the pilot and/or co-pilot using the onboard systems/units 114, 116, 120. For example, the communications unit 120 may receive meteorological information from an external weather monitoring system, such as a Doppler radar monitoring system, a convective forecast system (e.g., a collaborative convective forecast product (CCFP) or national convective weather forecast (NCWF) system), an infrared satellite system, or the like.

The avionic systems 114 may include an ADS-B unit that broadcasts and receives position, attitude, and direction transmitted between aircrafts, and may be used to determine air traffic constraints in addition to air traffic data, instructions, and/or altitude constraints received from the ATC or other sources.

The avionic systems 114 also may include a performance unit or system that collects sensor data and places the data in a performance database for flight plan processing. The performance system may use the sensor data to convert measurements into a format or measurement units (kph for example) of performance parameters for use by the other units of the FMS 116. Such performance parameters may include aircraft state and condition (such as weight, fuel level, etc.), position (altitude and lateral location), attitude (roll, pitch, and yaw), airspeed, vertical speed, aircraft control settings such as for thrust, drag management, and so forth, fuel consumption, flight path data, and so on. The performance system can determine actual, current state, or past aircraft performance at a point in time or flight path location, or can compute estimated performance at a downpath location on a flight plan.

The avionic systems 114 also may have a separate weather system or unit that may have current weather conditions obtained from aircraft sensor data at sensor unit (not shown), wireless transmission from remote weather sources including the ATC or weather information servers, but also from the pilot or crew via FMS input pages displayed on input interface 110 or 112. Such information may include wind direction and speed, precipitation, humidity, air pressure, and so forth.

It will be appreciated that FIG. 1 is a simplified representation of the aircraft system 100 for purposes of explanation and ease of description, and FIG. 1 is not intended to limit the application or scope of the subject matter described herein in any way. It should be appreciated that although FIG. 1 shows the display device 108, the user input interface 110 or 112, and the processors 102 as being located onboard the aircraft 101 (e.g., in the cockpit), in practice, one or more of the display device 108, the user input interface 110 or 112, and/or the processors 102 may be located outside the aircraft 101 (e.g., on the ground as part of an air traffic control center or another command center, or on a simulator) and communicatively coupled to the remaining elements of the aircraft system 100 (e.g., via a data link and/or communications unit 120). Thus, by one form, the term onboard generally refers to the main tasks performed by each unit, system, or component of system 100 on the aircraft being performed onboard the aircraft, although any of these units may have tasks performed remotely via wireless communication off-board as mentioned. Thus, the on-board portion of these components, systems, or units may communicate data to other components, units, or systems onboard or provide data to the pilot, while the processing of the data such as computations or operation of algorithms may be performed remotely from the aircraft. By one form, at least the display device 108, input interfaces 110 and 112, and processors 102 are onboard. Many variations are contemplated.

In some implementations, the units, components, or systems of system 100 may be at least partially operated from remote devices whether the device is on-board or off-board. For example, the display device 108, the user input interface 110 or 112, and/or the processors 102 may be implemented as an electronic flight bag (EFB) that is separate from the aircraft 101 but capable of being communicatively coupled to the other elements of the aircraft system 100 when onboard the aircraft 101, and whether wirelessly or by wire. Similarly, in some implementations, the data storage element 122 may be located outside the aircraft 101 and communicatively coupled to the processors 102 via a data link and/or communications unit 120. Furthermore, practical implementations of the aircraft system 100 and/or aircraft 101 will include numerous other devices and components for providing additional functions and features, as will be appreciated in the art. In this regard, it will be appreciated that although FIG. 1 shows a single display device 108, in practice, additional display devices may be present onboard the aircraft 101. Additionally, it should be noted that in other implementations, features and/or functionality of processors 102 described herein can be implemented by or otherwise integrated with the features and/or functionality provided by the display control unit 124 or the FMS 116, or vice versa. In other words, some implementations may integrate the processors 102 with the display control unit 124 or the FMS 116. Thus, the processors 102 may be a component of the display control unit 124 and/or the FMS 116.

The FRA display unit 104 may include an FRA activation unit 126, a factor selection unit 128, an entry/exit selection unit 130, an alternate FRA route display unit 132, a route differences unit 134, a route request unit 136, and a route activation unit 138. The operation of these units, each including GUI requests, of the FRA display unit 104 in addition to the aircraft parameters unit 118 generates FRA flight plans according to the implementations described herein and are used to operate process 200 described in detail below.

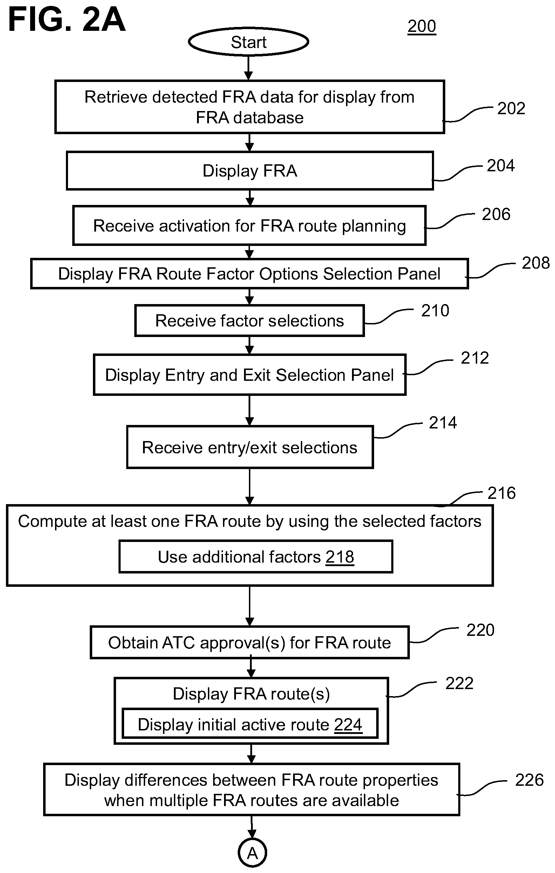

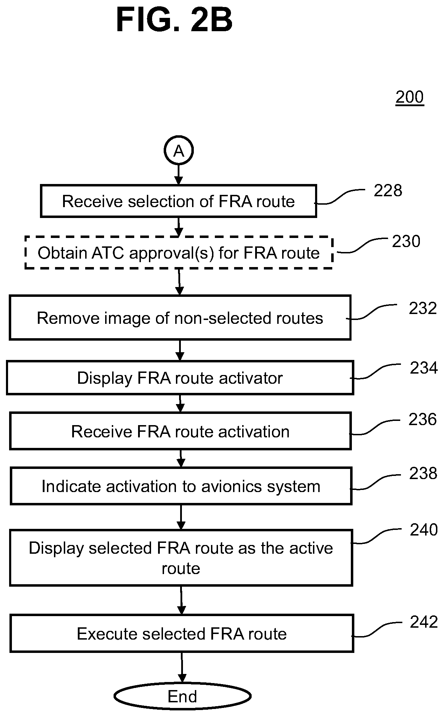

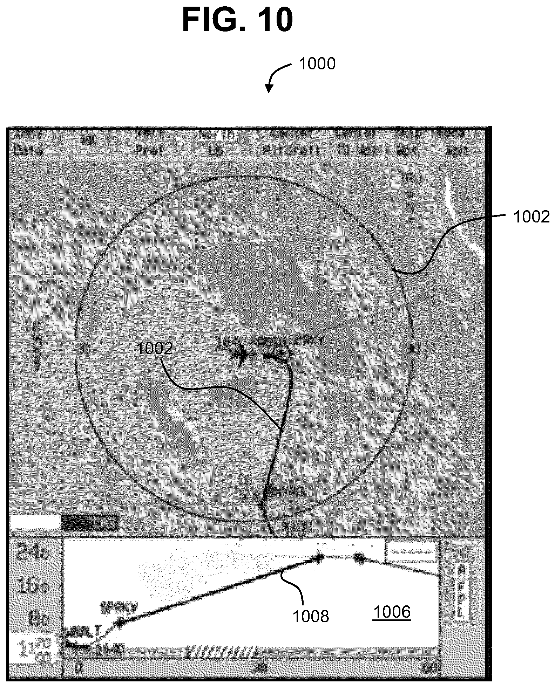

Referring to FIGS. 2A-2B, a process 200 for generating an FRA flight plan according to at least one of the implementations herein has operations 202 to 242, generally numbered evenly. The process 200 may refer to any of the systems, devices, flight plans, or paths described in FIGS. 1 and 3-10, where relevant.

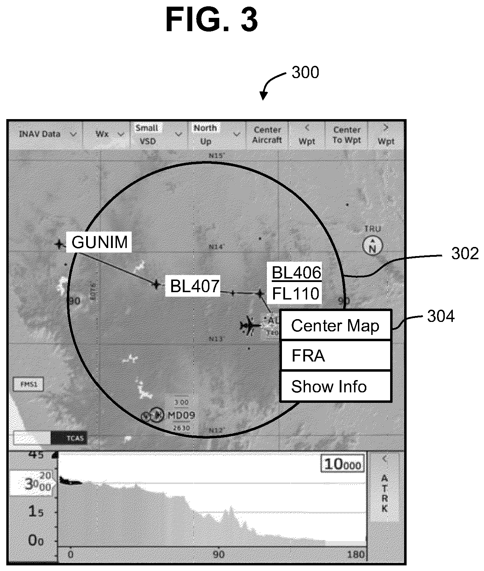

While referring to FIG. 3, process 200 may include "retrieve detected FRA data for display from FRA database" 202, and "display FRA" 204. Particularly, the FMS 116 may receive a notification and data of an FRA from multiple sources including the FRA database 106 or other database, and/or an ATC, other airspace regulatory agency, or other external source. The databases or other sources may provide a list of known FRAs and the properties of each FRA (such as boundary coordinates and entry and/or exit waypoints). Once detected, the FMS 116 may display an FRA 302 on a horizontal or lateral situation (or situational) display (HSD) 300, and that may be an FMS page on a display shown to a pilot on an avionics display of the display device 108. It will be noted that the FRA 302 is generally designated here as being within a range ring or range circle for purposes of describing the methods here, but the circle most likely will not represent an actual boundary of the FRA. The FRA 302 instead may be defined by available exit and entry waypoints, and coordinates for a line representing such an FRA boundary may or may not be shown. Here an ownship location is indicated by the airplane symbol, and an active or initial flight plan set before reaching the FRA 302 extends through the FRA 302 as shown with waypoints BL406, BL407, and GUNIM, and where the ACTIVE route may have segments (not shown) extending outside of the FRA 302 where the waypoints GUNIM and BL406 are potential exit and entry points, respectively. An initial vertical profile of the active flight plan may also be shown as well.

It should be noted that the HSD 300 is shown on an FMS page that may have a number of selectable tabs to show other FMS pages not relevant here. While not all text and the grey scale depictions on FIG. 3 or any of the figures of the present disclosure are clear, the text is not relevant to the present disclosure and need not be clarified, and the precision of the grey scale depictions of the avionics displays or images themselves are not relevant either. All that is needed is a general sense that an HSD or other avionics image is being displayed. All objects or GUIs relevant to the present disclosure are shown with clarity.

Process 200 may include "receive activation for FRA route planning" 206. By one example implementation, upon detection and display of the FRA 302, and when the pilot touches the ownship on a touch screen or clicks via mouse or joystick (as described above) on the ownship for example, the FRA activation unit 126 displays a FRA activation menu 304 by sending GUI requests to a GUI as one example and that may be part considered to be part of the display control 124, the display device 108, or another unit. A GUI also may be considered part of any of the units mentioned that are performing a function when the GUI displays images for that unit and receives pilot or user interactions relating to that unit. Here in this case, the menu 304 may be a pop-up menu, on the horizontal situation display 300. The FRA activation menu 304 is shown on the same avionics display as the FRA 302 for ease of use and convenience for the pilot, but may be shown on another display when desired. Otherwise, the FRA activation menu 304 may be automatically placed in view whenever the FRA 302 is first detected and displayed, and without initiation by a user or pilot.

The FRA activation menu 304 may list one of a number of available tasks that relate to the HSD 300. The FRA activation menu 304 in this example has a "center map" command button, a "FRA" button for FRA activation, and a "show info" button that may display FRA-related data as well as many other types of data related to the HSD 300 and the initial flight plan being shown, such as waypoints, and other navigational data. The selection by the pilot on the menu 304 is then signaled by the GUI to the FRA activation unit 126 in one example.

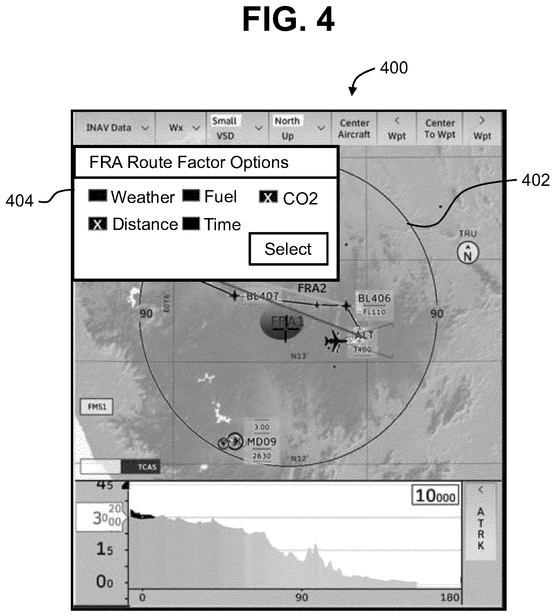

Referring to FIG. 4, once a user or pilot selects the FRA button by touch, mouse, joystick or other interface device as described above, the FRA activation unit 126 may provide a signal, flag, or other indicator for the factor selection unit 128. Thus, in response, the factor selection unit 128 operates to "display FRA route factor options selection panel" 208. As shown on HSD 400, which is the same as HSD 300, an FRA 402 is provided similar to FRA 302 except now the FRA activation menu 304 is removed and an FRA route factor options selection panel 404 (or parameter priority panel or just panel) is shown instead. The panel 404 lists one or more selectable parameter priorities to be used by the FMS 116.

The factors or parameter priorities may include weather used when rough weather has been indicated to the pilot, fuel (or fuel efficiency), CO2 (or reduction of harmful emissions), distance (referring to the shortest lateral distance through the FRA), and time (referring to the fastest time through the FRA). The pilot may be permitted to select any one or more of these parameter priorities. Other factors may be listed as well if not already required to be considered by the FMS. This may include aircraft traffic, certain performance criteria (such as for operational efficiency and current state of the aircraft, crew hours, etc.), certain regulatory restrictions such as airspace restrictions, aircraft type, aircraft limitations such as maximum capacity or maximum thresholds for the aircraft, engine type, ATC requirements, any combination of these, and so forth. Many examples not mentioned here may be used.

While the panel 404 is shown with parameter priorities selected with an X, the parameter priorities could be selected by entering a ranking number into the checkbox instead, and ranked from highest priority to lowest. When the FMS is determining a flight plan and a conflict exists between two or more competing parameter priorities, then the flight plan setting for the higher priority will prevail, assuming settings from the conflicting parameter priorities are both available relative to all other factors and considerations that are required to be considered by the FMS.

By this example implementation, and whether or not rankings are being used, some factors or parameters will be automatically set to a lower priority and may be sacrificed for the selected parameter priorities. This is particularly true for distance when a distance of travel is set to be longer, while the FRA flight plan is still more efficient regarding time and/or sustainable eco-friendly results for example.

With the parameter priority panel 404 arranged as described above, FRA flight planning for a fuel efficient and/or low emission flight plan is significantly easier to generate by simply informing the FMS of the priorities. This arrangement also may establish the pilot and the ATC (as described below) as the highest authority for selecting the parameter priorities (or factors) to generate the FRA flight plan.

The FRA route factor options selection panel 404 may have a select or confirm button to confirm and submit the selections. Process 200 then may include "receive factor selections" 210, where the factor selection unit 128 may provide the factor selections (or parameter priorities) to the aircraft parameter unit 118 for use by the FMS 116. The activating the cancel button may remove the system from an FRA flight planning mode and may remove the panel 404 from the HSD 400.

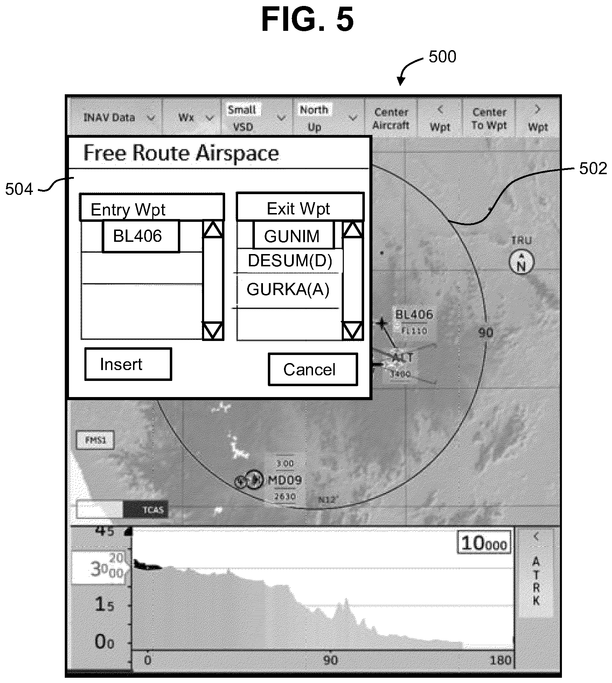

Referring to FIG. 5, and by one example form, process 200 may include "display entry and exit selections panel" 212, and this may be operated by the entry/exit selection unit 130. Here by one option, the FRA route factor options panel 404 is replaced with a free route airspace panel 504 (or entry/exit waypoint menu or panel) on an HSD 500 showing an FRA 502 that is the same as FRA 302 and 402. The free route airspace panel 504 may have one list of entry waypoints, here being BL406, and another list of exit waypoints, here showing GUNIM, DESUM(D), and GURKA(A) in this example.

By this example form, the free route airspace panel 504 pops up in response to the selection of the parameter priorities, but in other example forms, the FMS 116 first generates multiple alternative FRA flight plans, and then the pilot may select one of the FRA flight plans. Upon the FRA flight plan selection, the pilot then may use the free route airspace panel 504 to select (or confirm) or change the entry and exit waypoints of the selected FRA flight plan. In either case, the pilot may hit the insert button on the free route airspace panel 504 to confirm the selection of the exit and/or entry waypoints so that the exit and/or entry waypoints are inserted (or will be inserted) onto an FRA flight plan. Otherwise, the pilot may select cancel and the FMS 116 may then determine its own entry and exit waypoints. With this arrangement then, each alternative FRA flight plan can have a different entry and exit point, whereas when the entry/exit waypoint menu 504 is used earlier, all of the alternative FRA flight plans will have the same FRA entry and exit points. The menu 504 may be displayed at both time points during the FRA planning operations to provide both options.

Once the insert button is selected, process 200 may include "receive entry/exit selections" 214, where the entry/exit selection unit 130 provides the selected entry and exit waypoints to the aircraft parameters unit 118 for use by the FMS to generate alternative FRA flight plans depending on which parameter priorities were selected, and which entry and exit points were selected. These attributes (the parameter priorities and entry/exit waypoints) provide input to the FMS system (or other navigational system when used) to compute the appropriate FRA route that can be used by the flight crew to meet the objective of saving time, fuel, reduced emissions, reduced distance, weather avoidance or compensation, or any combination of these as well as any of the other factors when suitable.

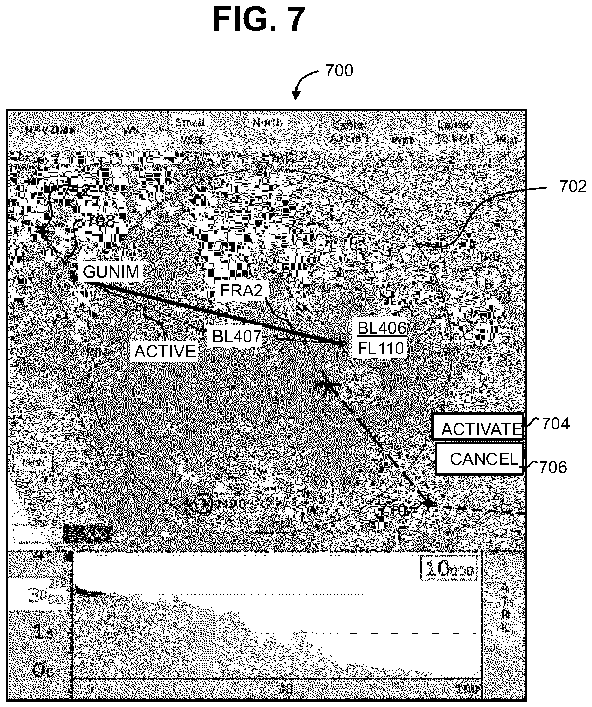

By yet alternative approach, the FMS 116 or the entry/exit selection unit 130 may analyze the pre-established or active flight plan extending exteriorly of the FRA, and then suggest which FRA entry and exit waypoints are the most practical, efficient, and so forth (and this may be related to the selected priorities or other priorities already established at the FMS 116 for example) for pilot selection. Thus, while referring to FIG. 7, an HSD 700 with an FRA 702 shows an example exterior flight path 708 (shown in dashed line) with an exterior waypoint 710 nearer to the FRA entry waypoint BL406, and while another exterior waypoint 712 is nearer to the exit waypoint GUNIM. Thus, in this case the shortest distance may be the priority. In this case, the FRA entry/exit selection unit 130 may have a suggested Entry/exit button (not shown) to activate this feature, and if activated, a GUI may emphasize the suggested entry and exit waypoints on the menu 504 (FIG. 5) for example. By yet another alternative, an activator (not shown) for optional automatic selection of the FRA entry and exit waypoints may be shown on the menu 504 or another display or GUI image, and once activated the FMS 116 and/or entry/exit selection unit 130 automatically selects the entry and exit waypoint, and by one example with the priorities mentioned herein, and then uses the automatically selected FRA entry and exit waypoints to determine alternative FRA routes or flight plans as described herein.

Process 200 may include "compute at least one FRA route by using the selected factors" 216. Once the pilot selects (or ranks) the desired parameter priorities, and by the present example, selects the exit and entry waypoints (or the entry and exit waypoints are set automatically, the FMS or other avionics or navigation system computes at least one FRA flight plan, and when available, multiple alternative FRA flight plans. This also may include "use additional factors" 218, which refers to the factors mentioned above when the FMS automatically considers the factors without pilot input. These may include the factors such as aircraft type, engine type along with many other real time factors such as traffic, weather conditions, aircraft performance, aircraft limitations (maximum capacities or thresholds of the aircraft) regulatory restrictions, and air traffic control (ATC) requirements or instructions.

The FMS 116 or other navigational system uses the selected parameter priorities to determine the one or multiple alternative FRA flight plans. If only one priority is selected, a single FRA flight plan may be generated. Alternatively, the single priority may be set at different levels, when such is suitable such as various fuel efficiency levels, to form multiple alternative FRA flight plans. By yet other alternatives when multiple priorities are selected and no ranking is provided by the pilot, then each possible variation (or some other combination) of rankings may be set for each alternative FRA flight plan. When the rankings are present, then multiple FRA flight plans may be provided consistent with those rankings. Also, it will be understood that the FMS 116 may automatically determine rankings when programmed to consider certain factors, such as weather severity levels, and or may have permanent predetermined rankings, such as regulatory restrictions including airspace restrictions or aircraft traffic always being the highest priority, in order to generate the alternative FRA flight plans. The FMS 116 then generates the alternative FRA flight plans with these factors and other known considerations such as the performance, position, and state of the aircraft and other external factors. The output FRA flight plans in this example then each may have a sequence of waypoints through the FRA including an entry and exit waypoint, in this example.

As mentioned by one form, the entry and exit waypoints may be initial settings by the FMS 116 or set by the pilot for all alternative FRA flight plans, and once a pilot or user selects one of the alternative FRA flight plans, the free route airspace panel 504 (FIG. 5) then may appear again for the pilot to change the initial entry and exit waypoints if desired and when alternative entry and exit waypoints are available.

Also by one example approach, process 200 may include "obtain ATC approval(s) for FRA route" 220, where each alternative FRA flight plan is first approved by the ATC before the alternative FRA flight plan is displayed to the pilot for selection. Thus, in this case, the pilot will understand such approvals have already been requested and provided so that a selected alternative FRA flight plan can be relatively immediately executed when needed.

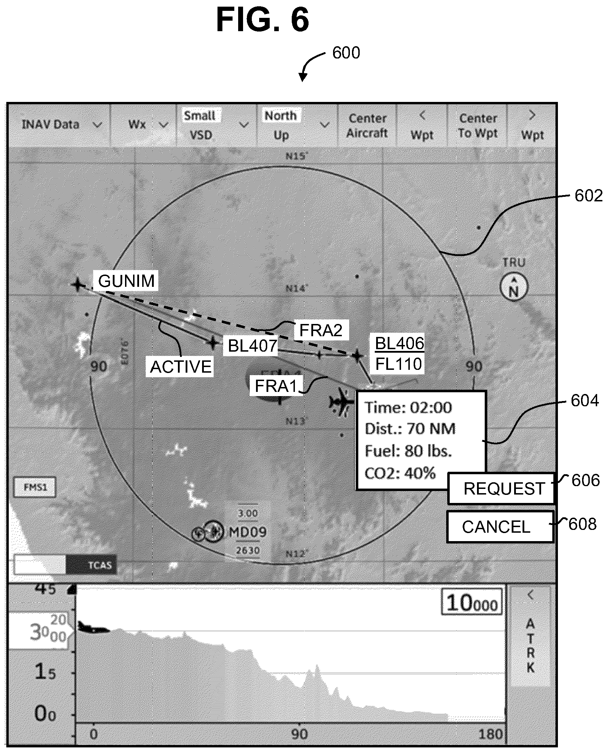

Referring to FIG. 6, and once FRA flight plans are ATC approved, process 200 may include "display FRA route(s)" 222, and by the alternate FRA route display unit 132. An HSD 600 has an FRA 602, which is the same as HSDs 300, 400, and 500. Here, however, multiple FRA flight plans (ACTIVE, FRA1, and FRA2) are simultaneously displayed by a GUI, although such plans could be displayed one at a time along with a GUI selection menu (not shown). This operation may include "display initial active route" 224, where the ACTIVE flight plan is the initial flight plan through the FRA 602 before FRA analysis described herein.

As mentioned, when a pilot selects one of the FRA flight plans (FRA1 or FRA2), optionally the pilot may be provided the entry/exit waypoint menu 504 to change these waypoints. When the entry and exit waypoints are changed, the corresponding FRA flight plan is recomputed by the FMS 116, for example. In the present example, instead or additionally, process 200 may include "display differences between FRA route properties when multiple FRA routes are available" 226, and this may be performed by the route differences unit 134. For this feature, when the user or pilot touches or hovers over (such as with a cursor) an FRA route, the differences in the parameters between that of the selected FRA flight plan and the active flight plan may be shown by a GUI The differences may be computed by the FMS 116 or by the route differences unit 134 itself for example. By one form, the route differences unit 132 may use a GUI to request display of the differences as shown in a text block or box 604. The differences box 604 may list only differences in results related to the parameter priorities selected by the pilot, all available selectable parameter priorities regardless of pilot selection, some other predetermined combination of factors or priorities, or a combination of parameter priorities placed on the differences box 604 based on predetermined factors, such as detected severe weather for example. In the example shown, the differences box 604 shows differences in time (or FRA flight duration), distance, fuel, and CO2 emissions. By yet another alternative, the pilot may select any two of the flight plans on the FRA 602, and the differences box 604 will display the differences in parameter results between those two flight plans. Many variations are contemplated.

The arrangement of the FRA flight paths and the display of the parameter result differences permits a pilot to easily and efficiently select and review available alternative FRA flight plans that are efficient and eco-friendly by reducing fuel consumption and CO2 emissions, without complex data entry steps, multiple screens, and so forth thereby significantly reducing pilot workload and distractions.

As yet another example feature, the pilot may touch or hover over an FRA flight plan, and additional data related to the touched FRA flight plan is displayed on the FRA 602 or other display. This may include the route from a current ownship position to the entry waypoint, the positions of the ownship that would be reached at certain time points, and so forth.

By one example form, once a pilot presses on or clicks on an FRA flight plan, the GUI changes the appearance of that flight plan to indicate it is initially selected by the pilot. This may include changing of a color, thickness, highlighting, line style (such as to dashed from continuous), and so forth. Once initially selected, the route request unit 136 requests a GUI to display a request button 606 and a cancel button 608 where the pilot can confirm the selection by hitting the request button 606, or otherwise cancel the selection by hitting the cancel button 608.

Thereafter, process 200 may include "receive selection of FRA route" 228, and where the route request unit 136 sends the FRA flight plan selection to the FMS 116 or other navigational system to execute the FRA flight plan. Optionally, and if not already performed, process 200 may include "obtain ATC approval(s) for FRA route" 230 at this point instead of operation 220.

Referring to FIG. 7, process 200 may include "remove image of non-selected routes" 232, and where the non-selected FRA flight paths are removed by a GUI for example. For this example, an HSD 700 with an FRA 702, which is the same as HSD 300, 400, 500, and 600, shows the selected FRA2 thickened and the non-selected FRA1 is removed. The initial ACTIVE route still remains. The selected route FRA2 is shown with FRA entry waypoint BL406 and FRA exit waypoint GUNIM.

Process 200 may include "display FRA route activator" 234, where an ACTIVATE button 704 is displayed by a GUIO and requested by a route activation unit 138, and along with a cancel button 706 on the HSD 700. Once the pilot presses the ACTIVATE button 704, process 200 then may include "receive FRA route activation" 236 via the GUI and by the route activation unit 138, and in turn the FMS 116. Next, process 200 may include "indicate activation to avionics system" 238 so that the other avionics systems can apply settings for the activated FRA flight plan FRA2 in this example for the eventual or immediate execution of the selected FRA flight plan FRA2. Note that the active flight plan 708 outside of the FRA 702 may remain visible on the HSD 700 for reference and as described above.

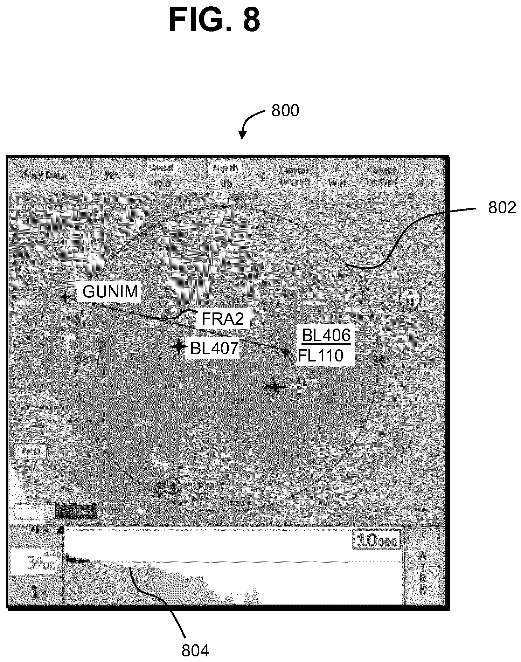

Referring to FIG. 8, selecting the ACTIVATE button 704 also inserts the pending flight plan FRA2 into active flight plan status as shown on an HSD 800, which is the same as HSD 300, 400, 500, 600, and 700. Here, however, the process 200 may include "display selected FRA route as the active route" 240, and the initially active flight plan is removed. The selected FRA flight plan FRA2 has the FRA entry waypoint BL406 and the FRA exit waypoint GUNIM, skipping the intermediate waypoint BL407. The HSD 800 may be adjacent to a vertical profile or trajectory display 804 that only shows the vertical profile of the final and selected FRA flight plan FRA2. Instead, the vertical profile 804 may be displayed on another display instead of adjacent the HSD 800.

Thereafter, process 200 may include "execute selected FRA route" 242, where the pilot directs the aircraft along the selected FRA flight plan FRA2, and whether being flown manually or on autopilot.

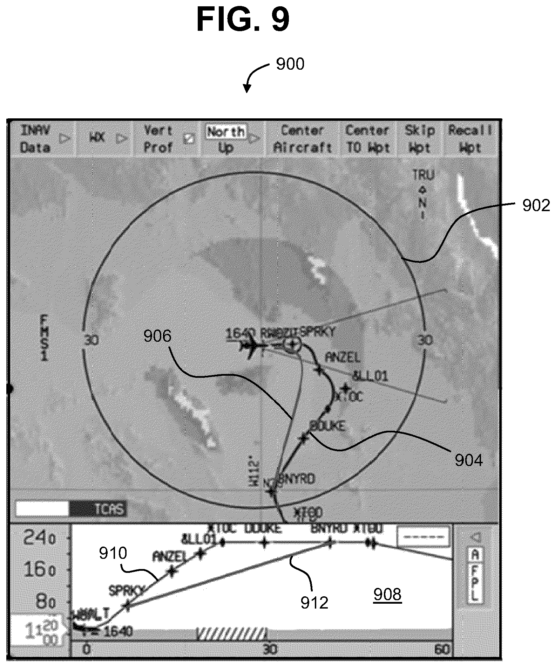

Referring to FIGS. 9-10, an example comparison of the displays to show vertical trajectories is provided. Here, an HSD 900 has an FRA 902 with an active or initial FRA flight plan 904 and a selected FRA flight plan 906. At this point, a vertical profile display or image 908 adjacent the HSD 900 shows an initially active vertical profile 910 for the initial FRA flight plan 904, and an FRA vertical profile 912 corresponding to the selected lateral FRA flight plan 906 on the HSD. Instead, and after the activation of the selected FRA flight plan 906, the corresponding flight plan 1004 is now active and the only FRA flight plan shown on the FRA 1002 of the HSD 1000. Likewise, only the corresponding vertical profile 1008 is shown on an adjacent vertical profile display 1006. The active flight plan, and any non-selected FRA flight plan have been removed.

It will be appreciated that the various illustrative logical blocks, modules, units, circuits, and algorithms described in connection with the implementations disclosed herein may be implemented as electronic hardware, computer software, or combinations of both. Some of the implementations and implementations are described above in terms of functional and/or logical block components (or modules or units) and various processing operations. However, it should be appreciated that such block components (or modules or units) may be realized by any number of hardware, software, and/or firmware components configured to perform the specified functions. To clearly illustrate this interchangeability of hardware and software, various illustrative components, blocks, units, modules, circuits, and operations have been described above generally in terms of their functionality. Whether such functionality is implemented as hardware, firmware, software, or a combination of these depends upon the particular application and design constraints imposed on the overall system. Skilled artisans may implement the described functionality in varying ways for each particular application, but such implementation decisions should not be interpreted as causing a departure from the scope of the present implementations. For example, an implementation of a system or a component may employ various integrated circuit components, e.g., memory elements, digital signal processing elements, logic elements, look-up tables, or the like, which may conduct a variety of functions under the control of one or more microprocessors or other control devices. In addition, those skilled in the art will appreciate that implementations described herein are merely examples.

The various illustrative logical blocks, modules, units, and circuits described in connection with the implementations disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The operations of a method or algorithm described in connection with the implementations disclosed herein may be embodied directly in hardware, firmware, in a software module executed by a processor, or in a combination of the these. A software module may reside in RAM memory, flash memory, ROM memory, EPROM memory, EEPROM memory, registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical unit components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can conduct the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an implementation of a system or a component may employ various integrated circuit components, e.g., memory elements, digital signal processing elements, logic elements, look-up tables, or the like, which may conduct a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium," "processor-readable medium," or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units, also referred to as modules, described in this specification have an implementation independence. For example, functionality referred to herein as a module or unit may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps or operations must be performed in a temporal or logical order according to such sequence unless it is specifically defined by the language of the claim. The process steps or operations may be interchanged in any order without departing from the scope of the disclosure as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one example implementation has been presented in the foregoing detailed description of the implementations, it should be appreciated that a vast number of variations exist. It should also be appreciated that the example implementation or example implementations are only examples, and are not intended to limit the scope, applicability, or configuration of the disclosures in any way. Rather, the foregoing detailed description will provide those skilled in the art with a convenient road map for implementing an example implementation. It being understood that various changes may be made in the function and arrangement of elements described in an example without departing from the scope of the implementations as set forth in the appended claims.

## Claims

1. A method, comprising:
receiving information of a free route airspace (FRA) downpath along a flight plan of an aircraft;
displaying, on at least one display device on the aircraft, the FRA on an avionics display;
displaying, on an avionics display of the at least one display device, a graphical user interface (GUI) showing an FRA route factor selection panel comprising multiple selectable flight plan parameter priorities available to be used to generate an FRA flight plan extending at least partially through the FRA;
receiving a selection of one or more of the FRA flight plan parameter priorities, the selection being made by using the GUI; and
displaying, on an avionics display of the at least one display device, at least one automatically generated FRA flight plan generated by using at least one of the selected flight plan parameter priorities.

2. The method of claim 1, comprising simultaneously displaying a plurality of the generated FRA flight plans on an avionics display, and each being an alternative FRA flight plan generated by emphasizing a different one of the selected flight plan parameter priorities or using a different combination of the selected flight plan parameter priorities; receiving a selection of one of the alternative FRA flight plans through a GUI on an avionics display of the at least one display devices; and providing the selected alternative flight plan to an avionics system to execute the selected alternative FRA flight plan.

3. The method of claim 2, wherein the GUI to select one of the alternative FRA flight plans is shown on the avionics display showing the FRA and the plurality of the generated FRA flight plans.

4. The method of claim 2 or 3, comprising removing non-selected alternative FRA flight plans and an initial active flight plan from the display of the FRA upon receiving a confirmation of a selection of one of the alternative FRA flight plans.

5. The method of claim 2, 3, or 4, comprising displaying, on a display device in the aircraft, predicted differences in parameter results of alternative FRA flight plans.

6. The method of claim 5, wherein the predicted differences are between an initial active FRA flight plan and a selected one of the alternative FRA flight plans.

7. The method of claim 5, wherein the predicted differences are between at least two of the selected alternative FRA flight plans.

8. The method of claim 5, wherein the predicted differences of one of the FRA flight plans is displayed when a user selects a displayed FRA flight plan associated with the predicted differences.

9. The method of any one of claims 1-8, wherein the selectable flight plan parameter priorities comprises at least one of weather, fuel consumption reduction, CO2 emission reduction, shortest distance, and shortest time.

10. The method of any one of claims 1-9, wherein the selectable flight plan parameter priorities comprises at least one of: aircraft performance, aircraft maximum capacities, aircraft traffic, aircraft type, aircraft engine type, and flight plan-related regulations.

11. The method of any one of claims 1-10, comprising displaying, on an avionics display of the at least one display device, an FRA entry and exit waypoint selection panel that shows at least one FRA entry point and at least one FRA exit point for an aircraft to respectively enter and exit the FRA; and receiving a selection of one of the FRA entry points and one of the FRA exit points to be used to automatically generate at least one FRA flight plan.

12. A system, comprising:
memory storing one or more databases of predetermined FRA flight plan data;
at least one display device in an aircraft cockpit; and
processor circuitry forming at least one processor communicatively coupled to the memory and the at least one display, the at least one processor being arranged to operate by:
receiving information of a free route airspace (FRA) downpath along a flight plan of an aircraft,
displaying, on the at least one display device, the FRA on an avionics display, displaying, on an avionics display of the at least one display device, a graphical user interface (GUI) showing an FRA route factor selection panel comprising multiple selectable flight plan parameter priorities available to be used to generate an FRA flight plan through the FRA,
receiving a selection of one or more of the FRA flight plan parameter priorities, and the selection being made by using the GUI, and
displaying, on an avionics display of the at least one display device, automatically generated multiple FRA flight plans each generated by using at least one of the selected flight plan parameter priorities.

13. The system of claim 12, wherein the at least one processor operates by retrieving aircraft traffic control (ATC)-type approval of each of the multiple FRA flight plans before displaying the multiple FRA flight plans.

14. The system of claim 12 or 13, comprising receiving a priority ranking of selected FRA flight plan parameter priorities by using the FRA route factor selection panel.

15. The system of claim 12, 13, or 14, comprising displaying, on a display device in the aircraft, predicted differences in parameter results of alternative FRA flight plans displayed on the display device, wherein the predicted differences relate only to the selected FRA flight plan parameter priorities.
